(19) Europäisches Patentamt / European Patent Office / Office européen des brevets

(11) **EP 3 282 399 B1**

(12) **EUROPÄISCHE PATENTSCHRIFT**

(45) Veröffentlichungstag und Bekanntmachung des Hinweises auf die Patenterteilung:
**13.05.2020 Patentblatt 2020/20**

(51) Int Cl.:
**G06N 3/08** [(2006.01)]

(21) Anmeldenummer: **16183771.1**

(22) Anmeldetag: **11.08.2016**

(54) **VERFAHREN ZUR VERBESSERTEN ERKENNUNG VON PROZESSANOMALIEN EINER TECHNISCHEN ANLAGE SOWIE ENTSPRECHENDES DIAGNOSESYSTEM**

METHOD FOR THE IMPROVED DETECTION OF PROCESS ANOMALIES OF A TECHNICAL INSTALLATION AND CORRESPONDING DIAGNOSTIC SYSTEM

PROCEDE DE RECONNAISSANCE AMELIORE D'ANOMALIES DE PROCESSUS D'UNE INSTALLATION TECHNIQUE ET SYSTEME DE DIAGNOSTIC CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.02.2018 Patentblatt 2018/07**

(73) Patentinhaber: **Siemens Aktiengesellschaft 80333 München (DE)**

(72) Erfinder:
• **Bierweiler, Thomas 76131 Karlsruhe (DE)**
• **Lenz, Henning 76135 Karlsruhe (DE)**

(56) Entgegenhaltungen:
**EP-A1- 2 881 822     EP-B1- 0 845 720**

• Y. S. NG ET AL: "A self-organizing map approach for process fault diagnosis during process transitions", AICHE ANNUAL MEETING, 12. November 2004 (2004-11-12), Seiten 1-12, XP055342478,
• CHRISTIAN W FREY: "Process diagnosis and monitoring of field bus based automation systems using self-organizing maps and watershed transformations", MULTISENSOR FUSION AND INTEGRATION FOR INTELLIGENT SYSTEMS, 2008. MFI 2008. IEEE INTERNATIONAL CONFERENCE ON, IEEE, PISCATAWAY, NJ, USA, 20. August 2008 (2008-08-20), Seiten 620-625, XP031346219, ISBN: 978-1-4244-2143-5

**Beschreibung**

Die Erfindung betrifft ein Verfahren zur Erkennung von Prozessanomalien einer technischen Anlage sowie ein entsprechendes Diagnosesystem, bei dem die Erkennung von Prozessanomalien mit Hilfe von sogenannten "selbst-organisierenden Karten" erfolgt.

In fertigungstechnischen und prozesstechnischen Anlagen werden analoge und digitale Signale erzeugt, ausgewertet und archiviert. Zur Auswertung historischer Daten sind verschiedene Methoden wie neuronale Netze, Support Vector Machines (SVM) oder selbstorganisierende Karten (self-organizing maps, SOM) bekannt.

Selbst-organisierende Karten eignen sich sehr gut, um Zustände in historischen Daten zu klassifizieren. Zur Laufzeit können Abweichungen bzw. Anomalien vom normalen Prozesszustand erkannt - und abhängig von der Datenbasis - Fehlzustände klassifiziert werden. Liegen in einer Anlage bekannte Gutzustände vor, so können diese zum Einlernen von selbst-organisierenden Karten genutzt werden. Damit lassen sich mit selbst-organisierenden Karten im laufenden Betrieb Abweichungen erkennen. Die Nutzung von SOM zur Überwachung von Anlagen ist bspw. in EP2472440B1 beschrieben. CHRISTIAN W FREY: "Process diagnosis and monitoring of field bus based automation systems using self-organizing maps and watershed transformations", IEEE INTERNATIONAL CONFERENCE ON MULTISENSOR FUSION AND INTEGRATION FOR INTELLIGENT SYSTEMS (MFI 2008), PISCATAWAY, NJ, USA, 20. August 2008, Seiten 620-625, ISBN: 978-1-4244-2143-5 offenbart ein computerimplementiertes Verfahren und ein Diagnosesystem, welche Prozessanomalien einer technischen Anlage unter Verwendung einer selbst-organisierten Karte erlernen, erkennen und ausgeben.

Nach Erkennung einer Abweichung ist es zur Ursachenfindung (root cause analysis) nützlich, die Abweichungen der einzelnen Messstellen vom Gutzustand zu ermitteln und daraus einen Symptomvektor zu bilden. Der Symptomvektor kann als Grundlage dann zur Ursachenfindung dienen. Ein mögliches Verfahren zur Ermittlung der Ursache aus einem Symptomvektor beschreibt bspw. EP2587329B1.

Bei der Nutzung dieser bekannten Verfahren oder Systeme treten vor allem zwei Nachteile auf:
Zur Vermeidung von kritischen Anlagenzuständen ist es wichtig, dass Abweichungen vom normalen Prozessverhalten frühzeitig erkannt werden. Die selbst-organisierenden Karten bilden in ihren Knoten verschiedene Anlagenzustände, insbesondere bei dynamischen Vorgängen, ab. Daher können Situationen auftreten, in denen Zustände mit Abweichungen von ihrem Normalzustand anderen Anlagenzuständen ähnlich sind. Diese Situationen, hier kurz als Abweichungen bezeichnet, werden dann von den bekannten Verfahren oder Diagnosesystemen nicht oder erst verspätet erkannt.

Ferner ist mit bekannten Verfahren oder Systemen keine zuverlässige Ursachenfindung möglich, da im Fehlerfall hiermit ein Symptomvektor nicht immer korrekt ermittelbar ist. Darüber hinaus können auch keine Abweichungen vom zeitlichen Verhalten erkannt werden.

Die der Erfindung zu Grunde liegende **Aufgabe** besteht nun darin, ein Verfahren zur verbesserten Erkennung von Prozessanomalien einer technischen Anlage sowie ein entsprechendes Diagnosesystem anzugeben, bei dem die oben genannten Nachteile möglichst vermieden werden.

Diese Aufgabe wird hinsichtlich des Verfahrens durch die Merkmale des Patentanspruchs 1 und hinsichtlich des Diagnosesystems durch die Merkmale des Patentanspruchs 6 erfindungsgemäß gelöst. Die weiteren Ansprüche betreffen bevorzugte Ausgestaltungen der Erfindung.

Die Erfindung betrifft im Wesentlichen ein Verfahren und ein Diagnosesystem zur verbesserten Erkennung einer Prozessanomalie einer technischen Anlage, bei dem zunächst eine selbst-organisierende Karte unter Verwendung der historischen Prozessdaten als Gutzustände der Anlage trainiert wird, wobei die Gutzustände zur Ermittlung der zeitlichen Reihenfolge bzw. eines Pfads der getroffenen Knoten sowie der Toleranzen der Treffer der Neuronen genutzt werden und wobei Schwellwerte für den euklidischen Abstand für die Gutzustände ermittelt und gespeichert werden, und bei dem die aktuellen Prozessdaten der Anlage in Form eines Zustandsvektors mit Hilfe der trainierten selbst-organisierenden Karte ausgewertet werden, wobei der euklidische Abstand des aktuellen Zustandsvektors zum getroffenen Neuron auf eine Überschreitung des Schwellwerts geprüft wird, wobei mit Hilfe des ermittelten Pfads ein Neuron, das getroffen werden sollte, ermittelt wird, sofern der Schwellwert nicht schon bei der Überprüfung mit dem getroffenen Neuron überschritten wurde und wobei ein Symptomvektor aus dem aktuellen Zustandsvektor und entweder dem getroffenen Neuron oder dem Neuron, das getroffen werden sollte, ermittelt wird. Wird optional zusammen mit den Pfaden auch die Anzahl der Treffer eines Knotens gespeichert, so lassen sich zeitliche Abweichungen vom Gutzustand ermitteln. Die Vorteile bestehen vor allem in einer frühzeitigen und zuverlässigen Erkennung von Abweichungen vom Normalzustand, der zusätzlichen Möglichkeit und in der korrekten Ermittlung eines Symptomvektors zum besseren Auffinden der Fehlerursache.

Nachfolgend wird die Erfindung anhand von in der Zeichnung dargestellten Ausführungsbeispielen näher erläutert.

Dabei zeigt

**Figur 1**    eine selbst-organisierende Karte zur Erläuterung des erfindungsgemäßen Verfahrens und

**Figur 2**    eine schematische Darstellung zur Erläuterung des erfindungsgemäßen Diagnosesystems.

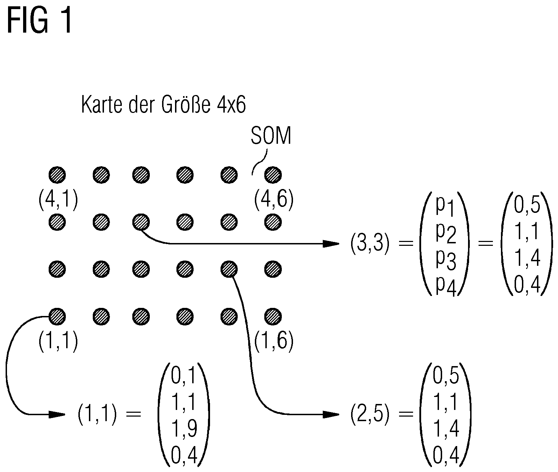

**Figur 1** zeigt beispielhaft eine selbst-organisierende Karte SOM mit 4 mal 6 Knoten bzw. Neuronen (1,1) ... (4,6). Darüber hinaus sind beispielhaft für einige in der Karte ermittelte Zustandsvektoren angegeben, die während einer Lernphase aus historischen Eingangsvektoren für Gutzustände eingelernt wurden, wobei die ermittelten Zustandsvektoren (hier in transponierter Form angegeben) beispielhaft wie folgt lauten:

$$(1,1) = (0,1 \ ; \ 1,1 \ ; \ 1,9 \ ; \ 0,4)^T,$$
$$(2,5) = (0,5 \ ; \ 1,1 \ ; \ 1,9 \ ; \ 0,4)^T,$$
$$(3,3) = (0,5 \ ; \ 1,1 \ ; \ 1,4 \ ; \ 0,4)^T.$$

Beim Einlernen mit Hilfe von historischen Daten wird die selbst-organisierende Karte SOM so optimiert, dass alle bekannten Prozesszustände, also Eingangsvektoren von Gutzuständen, einen möglichst geringen euklidischen Abstand zu den in der Karte ermittelten Zustandsvektoren haben.

In der Lernphase können Schwellwerte für die euklidischen Abstände der Gutzustände zu den betreffenden Neuronen der selbst-organisierenden Karte SOM vorgegeben werden.

Nach Optimierung der Karte SOM können optional durch erneute Auswertung der Gutzustände automatisch Schwellwerte für die einzelnen Knotenpunkte berechnet werden.

Nach optionaler Beaufschlagung durch einen Toleranzwert auf die Schwellwerte ergibt sich so eine besonders stabile und zuverlässige Abbildung des Gutzustands.

Abweichungen zur Laufzeit werden dadurch erkannt, dass der euklidische Abstand zwischen aktuellem Eingangsvektor und Zustandsvektor des betreffenden Knotens größer als im Normalfall ist. Dabei wird häufig nicht nur der ermittelte Abstand größer, sondern oft ändert sich dadurch in nachteiliger Weise auch das getroffene Neuron bzw. der betreffende Knoten der Karte.

Dies soll nachfolgend an konkreten Beispielen basierend auf den in Figur 1 dargestellten Verhältnissen, also einer eingelernten Karte SOM der Größe 4x6 näher erläutert werden.

Ein aktueller Prozessvektor PN im laufenden Betrieb habe hier bspw. den Wert

$$P_N = \begin{pmatrix} 0,51 \\ 1,05 \\ 1,5 \\ 0,45 \end{pmatrix}.$$

Der Knoten (3,3) sei der Knoten mit dem kleinsten euklidischen Abstand

$$\Delta_N = |P_N - (3,3)| = \left\| \begin{pmatrix} 0,01 \\ -0,05 \\ -0,1 \\ 0,05 \end{pmatrix} \right\| \approx 0,12.$$

Unter Berücksichtigung eines aus den Gutzuständen ermittelten Schwellwerts von bspw. 0,15 liegt hier keine Abweichung vor und der Symptomvektor $S_N$ ergibt sich also zu

$$\vec{S}_N = \vec{0} = \begin{pmatrix} 0 \\ 0 \\ 0 \\ 0 \end{pmatrix}.$$

Nun liege eine Abweichung vor. Der Prozessvektor habe anstelle $P_N$ bspw. den Wert

$$P_{F1} = \begin{pmatrix} 0,49 \\ 1,15 \\ 1,85 \\ 0,35 \end{pmatrix}.$$

Der Abstand von Knoten (3,3) ergibt sich dann für diesen Fall zu $\Delta_{F1;(3,3)} \approx 0,46$. Damit wäre eine Abweichung gegeben und würde erkannt, weil sie über dem betreffenden Schwellwert 0,15 liegt.

Ein weiterer in der Karte eingelernter Knoten (2,5), der die Prozesswerte in einem anderen Zustand abbildet, hat jedoch zum obigen Prozessvektor $P_{F1}$ nur den Abstand $\Delta_{F1;(2,5)} \approx 0,09$. Die Abweichung wird also auf Grund des weiteren Knotens (2,5) nicht erkannt und das System gibt keinen Alarm aus.

Dieses oben an einem Beispiel erläuterte Problem wird erfindungsgemäß dadurch gelöst, dass wie bisher in einem ersten Schritt aus den Gutzuständen die Karte eingelernt wird. In einem zweiten, zusätzlichen Schritt jedoch werden die Gutzustände dazu genutzt, die zeitliche Reihenfolge bzw. Referenzpfade der getroffenen Knoten zu ermitteln und zu speichern. Toleranzen der Treffer der Neuronen werden dabei ebenfalls ermittelt und gespeichert und führen zu Referenzpfadbereichen. Des Weiteren werden wie bisher Schwellwerte für den euklidischen Abstand für die Gutzustände ermittelt und gespeichert.

Im vorliegenden Fall würde das System zur Laufzeit erkennen, dass der euklidische Abstand zum richtigen Knoten (3,3) ermittelt werden muss. Dieser Abstand ergibt sich zu $\Delta_{F1;(3,3)} \approx 0,46$ und liegt deutlich über dem Schwellwert von 0,15, wodurch das Diagnosesystem eine Abweichung erkennt.

Zur Ermittlung eines korrekten Symptomvektors ist es erstens notwendig, dass eine Abweichung erkannt wird, und zweitens, dass die Abweichungen der Prozessgrößen ausgehend von dem Kartenknoten ermittelt werden, der im Gutzustand der Anlage getroffen worden wäre.

Ein weiterer Prozessvektor eines fehlerhaften Zustands habe bspw. den Wert

$$P_{F2} = \begin{pmatrix} 0,15 \\ 1,15 \\ 1,85 \\ 0,35 \end{pmatrix}.$$

Der geringste euklidische Abstand zur Karte ergibt sich über den Knoten (1,1) zu $\Delta_{F2;(1,1)} \approx 0,1$. Eine Abweichung wird also nicht erkannt, der Symptomvektor wäre der Nullvektor $\vec{0}$. Unter Berücksichtigung des Pfades erkennt nun das System erfindungsgemäß, dass wie oben der Knoten (3,3) getroffen werden sollte. Der euklidische Abstand beträgt dann $\Delta_{F2;(3,3)} \approx 0,57$ und der Symptomvektor ergibt sich unter Berücksichtigung von Schwellwerten dann zu

$$\vec{S}_{F2} = \begin{pmatrix} -1 \\ 0 \\ 1 \\ 0 \end{pmatrix}.$$

D. h. die Messstelle p1 =-1 liefert einen zu niedrigen Messwert, die Messstelle p3 =1 zeigt einen zu hohen Messwert an und die Messstellen p2 =0 bzw. p4 =0 zeigen keine Abweichung.

Gelöst wird dieses Problem dadurch, dass beim Einlernen der Karte nicht nur die Zustands-Vektoren der Kartenknoten ermittelt werden, sondern auch die Reihenfolge der getroffenen Knoten, die Pfade, ermittelt und gespeichert werden.

Diese Pfadverfolgung ermöglicht es, beim Eintreten von Abweichungen den im Gutzustand getroffenen Knoten zu ermitteln und dann ausgehend von dem im Gutzustand getroffenen Knoten einen korrekten Symptomvektor zu ermitteln mit dessen Hilfe die Ursachenermittlung zielgenau erfolgen kann.

Eine weitere Verbesserung der Diagnose betrifft die zeitliche Dauer der Zustände. In der Regel erfolgt in digitalen Systemen die Abtastung in diskreten Zeitschritten. Wird zusammen mit den Pfaden auch die Anzahl der Treffer eines Knotens gespeichert, so lassen sich zeitliche Abweichungen vom Gutzustand ebenfalls ermitteln.

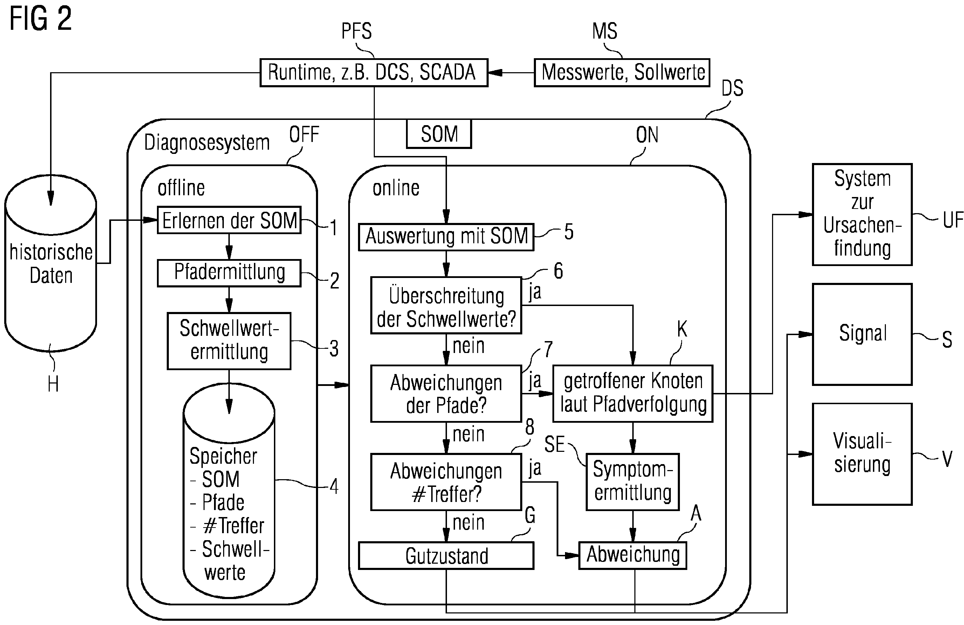

In **Figur 2** ist eine schematische Darstellung zur Erläuterung des erfindungsgemäßen Diagnosesystems DS gezeigt, bei dem ein Prozessführungssystem PFS, z. B. DCS oder SCADA, zur Laufzeit Messwerte misst und Sollwerte vorgibt. Diese Mess- und Sollwerte MS werden archiviert und bilden historische Daten H.

Offline OFF werden zunächst die selbst-organisierenden Karten SOM mit Hilfe der historischen Daten H eingelernt 1, Pfade 2, Schwellwerte 3 und optional die Anzahl der Treffer in der zeitlichen Reihenfolge ermittelt und gespeichert 4.

Online ON werden dann die aktuellen Prozesswerte aus der Runtime des Prozessführungssystem PFS durch die selbst-organisierenden Karten SOM ausgewertet 5. Die Daten der aktuellen Prozesswerte werden zunächst auf Überschreitung von Schwellwerten 6 überprüft und ein getroffener Knoten K laut Pfadverfolgung, hier also das getroffene Neuron, ermittelt, sofern eine Überschreitung vorliegt.

Für den Fall, dass keine Überschreitung vorliegt, werden Abweichungen der aktuellen Pfade 7 untersucht und ebenfalls ein getroffener Knoten K laut Pfadverfolgung, hier also das Neuron, das getroffen werden sollte, ermittelt, sofern eine Abweichung vorliegt.

Aus dem getroffenen Knoten K laut Pfadverfolgung werden mit Hilfe einer Einheit zur Symptom-Ermittlung SE Daten, bspw. in Form eines Symptom-Vektors, für ein System zur Ursachenfindung UF geliefert, das selbst nicht Gegenstand der Erfindung ist und eine genauere Fehleranalyse ermöglicht. Darüber hinaus liefert die Symptom-Ermittlung SE eine Abweichung A.

Sofern keine Abweichungen der Pfade 7 festgestellt werden, kann, vor der endgültigen Feststellung eines Gutzustandes G, optional noch die Anzahl der zeitlich nacheinander folgenden Treffer 8 überprüft und dabei ebenfalls der Gutzustand G oder aber eine Abweichung A festgestellt werden, die dann als Ausgangssignal S des Diagnosesystems DS dienen und/oder einer Visualisierung V zugeführt werden.

Durch die Ermittlung und Verfolgung der Pfade bzw. der Reihenfolge der Treffer der Knoten ergeben sich in vorteilhafter Weise eine frühzeitige und zuverlässige Erkennung von Abweichungen vom Normalzustand, eine zusätzliche Möglichkeit Abweichungen im zeitlichen Verhalten zu erkennen und eine korrekte Ermittlung eines Symptomvektors basierend auf den Abweichungen der einzelnen Prozesswerte vom Gutzustand, der als Eingangsgröße des Systems zur Ursachenfindung UF notwendig ist.

Hiermit können Anomalien in Anlagen frühzeitig und zuverlässig erkannt werden sowie Fehlzustände und ungeplante Shutdowns verkürzt oder sogar vermieden werden.

**Patentansprüche**

1. Computerimplementiertes Verfahren zur verbesserten Erkennung einer Prozessanomalie einer technischen Anlage, Folgendes umfassend:

   - Trainieren (1) einer selbst-organisierenden Karte (SOM) in einem ersten Vorbereitungsschritt unter Verwendung der historischen Prozessdaten (H) als Gutzustände der Anlage in einer Lernphase,

- Ermitteln (2) und Speichern (4) von Referenzpfadbereichen in einem zweiten Vorbereitungsschritt, wobei die Referenzpfadbereiche mit Hilfe der zeitlichen Reihenfolge der getroffenen Neuronen der selbst-organisierenden Karte (SOM) und der Toleranzen der Treffer in der Lernphase festgelegt werden,
- Speichern (4) von Schwellwerten für die euklidischen Abstände der Gutzustände zu den betreffenden Neuronen der selbst-organisierenden Karte (SOM) in der Lernphase,
- Auswerten (5) der aktuellen Prozessdaten der Anlage in Form eines Zustandsvektors mit Hilfe der Lernphase trainierten selbst-organisierenden Karte (SOM),
- Überprüfen (6) des euklidischen Abstands des aktuellen Zustandsvektors zum getroffenen Neuron auf eine Überschreitung des in der Lernphase ermittelten Schwellwerts,
- Überprüfen (7) des aktuellen Pfades durch Vergleich mit den in der Lernphase ermittelten Referenzpfadbereichen und Festlegen eines Neurons das getroffen werden sollte mit Hilfe des betreffenden Referenzpfadbereichs, sofern der Schwellwert nicht bereits bei der Überprüfung mit dem getroffenen Neuron überschritten wurde,
- Ermitteln (SE) eines Symptomvektors aus dem aktuellen Zustandsvektor und entweder dem getroffenen Neuron (6) oder dem Neuron das getroffen werden sollte (7), wobei die Ermittlung unter Berücksichtigung des Schwellenwerts des betreffenden Neurons (K) erfolgt und wobei ein vom Nullvektor verschiedener Symptomvektor die Prozessanomalie anzeigt (A) und der Symptomvektor die Prozessanomalie näher spezifiziert (SE, UF), und
- Ausgeben des Symptomvektors,

**dadurch gekennzeichnet, dass**

- in der Lernphase neben der Reihenfolge der getroffenen Neuronen entlang eines Pfades noch zusätzlich die jeweilige Dauer der Gutzustände erfasst und gespeichert (4) wird und
- wobei, sofern bei der Auswertung der aktuellen Prozesszustände keine Überschreitung des Schwellwerts und keine Abweichung des Pfads vorlag, noch zusätzlich mit Hilfe der Dauer der Gutzustände eine Überprüfung (8) der Dauer der aktuellen Zustände erfolgt und hiermit eine Prozessanomalie (A) festgestellt wird.

2.  Verfahren nach Anspruch 1,

    - bei dem Prozesse der technische Anlage in diskreten regelmäßigen Zeitabschnitten abgetastet werden,

- bei dem an Stelle der jeweiligen Dauer der Gutzustände die Anzahl der Treffer eines jeweiligen Neurons erfasst und gespeichert (4) wird und
- bei dem an Stelle der Überprüfung der Dauer der aktuellen Zustände eine Überprüfung mit Hilfe der jeweiligen Trefferzahl (8) der aktuellen Zustände erfolgt.

3.  Verfahren nach einem der vorhergehenden Ansprüche,
    bei dem nach dem Trainieren eine Optimierung der selbst-organisierenden Karte (SOM) erfolgt und die Schwellwerte (3) für die einzelnen Neuronen durch erneute Auswertung von Gutzuständen automatisch berechnet und gespeichert werden.

4.  Verfahren nach einem der vorhergehenden Ansprüche,
    bei dem die Schwellwerte mit einem Toleranzwert beaufschlagt werden.

5.  Computerprogrammprodukt, welches einen computerlesbaren Programmcode umfasst, der, wenn er auf einem Computer ausgeführt wird, das Verfahren nach einem der Ansprüche 1 bis 4 ausführt.

6.  Diagnosesystem umfassend:

    - Mittel zum Trainieren (1) einer selbst-organisierenden Karte (SOM) unter Verwendung der historischen Prozessdaten (H) als Gutzustände der Anlage in einer Lernphase,
    - Mittel zum Ermitteln (2) und Speichern (4) von Referenzpfadbereichen in der Lernphase, wobei die Referenzpfadbereiche mit Hilfe der zeitlichen Reihenfolge der getroffenen Neuronen der selbst-organisierenden Karte (SOM) und der Toleranzen der Treffer festlegbar sind,
    - Mittel zum Speichern von Schwellwerten (4) für die euklidischen Abstände der Gutzustände zu den betreffenden Neuronen der selbst-organisierenden Karte (SOM) in der Lernphase,
    - Mittel zum Auswerten (5) der aktuellen Prozessdaten der Anlage in Form eines Zustandsvektors mit Hilfe der in der Lernphase trainierten selbst-organisierenden Karte (SOM),
    - Mittel zum Überprüfen (6) des euklidischen Abstands des aktuellen Zustandsvektors zum getroffenen Neuron auf eine Überschreitung des in der Lernphase ermittelten Schwellwerts,
    - Mittel zum Überprüfen (7) des aktuellen Pfades durch Vergleich mit den in der Lernphase ermittelten Referenzpfadbereichen und zum Festlegen eines Neurons das getroffen werden sollte mit Hilfe des betreffenden Referenzpfadbereichs, sofern der Schwellwert nicht schon bei der Überprüfung mit dem getroffenen Neuron überschritten wurde,

- Mittel zum Ermitteln (SE) eines Symptomvektors aus dem aktuellen Zustandsvektor und entweder dem getroffen Neuron oder dem Neuron, das getroffen werden sollte, wobei die Ermittlung unter Berücksichtigung des Schwellenwerts des betreffenden Neurons (K) erfolgt und wobei ein vom Nullvektor verschiedener Symptomvektor die Prozessanomalie (A) anzeigt und der Symptomvektor die Prozessanomalie näher spezifiziert (SE, UF), und

    - Mittel zum Ausgeben des Symptomvektors,
    - **dadurch gekennzeichnet, dass** in der Lernphase neben der Reihenfolge der getroffen Neuronen entlang eines Pfades noch zusätzlich die jeweilige Dauer der Gutzustände erfasst und gespeichert (4) wird und

- wobei, sofern bei der Auswertung der aktuellen Prozesszustände keine Überschreitung des Schwellwerts und keine Abweichung des Pfads vorlag, noch zusätzlich mit Hilfe der Dauer der Gutzustände eine Überprüfung (8) der Dauer der aktuellen Zustände erfolgt und hiermit eine Prozessanomalie (A) festgestellt wird.

## Claims

1. Computer-implemented method for improved identification of a process anomaly in a technical facility, comprising the following:

   - training (1) a self-organising map (SOM) in a first preparation step using the historical process data (H) as good states of the facility in a learning phase,
   - determination (2) and storage (4) of reference path regions in a second preparation step, wherein the reference path regions are defined with the aid of the temporal sequence of neuron hits in the self-organising map (SOM) and the tolerances of the hits in the learning phase,
   - storage (4) of threshold values for the Euclidean distances of the good states to the relevant neurons in the self-organising map (SOM) in the learning phase,
   - evaluation (5) of the current process data in the facility in the form of a state vector with the aid of the self-organising map (SOM) trained in the learning phase,
   - checking (6) the Euclidean distances of the current state vector to the neuron hit as to whether the threshold value determined in the learning phase is exceeded,
   - checking (7) the current path by comparison with the reference path regions determined in the learning phase and definition of a neuron to be hit with the aid of the relevant reference path region as long as the threshold value was not already exceeded in the check with the neuron hit,
   - determination (SE) of a symptom vector from the current state vector and either the neuron hit (6) or the neuron that is to be hit (7), wherein the determination is performed taking into account the threshold value of the relevant neuron (K) and wherein a symptom vector different from the zero vector flags the process anomaly (A) and the symptom vector specifies the process anomaly in more detail (SE, UF) and
   - outputting the symptom vector,

   **characterised in that**,

   - in addition to the sequence of neuron hits along a path in the learning phase, the respective duration of the good states is additionally acquired and stored (4) and
   - in which, as long as, during the evaluation of the current process states, the threshold value was not exceeded and the path did not deviate, the duration the good states is additionally used to check (8) the duration of the current states and thereby to identify a process anomaly (A).

2. Method according to claim 1,

   - with which processes of the technical facility are sampled at discrete regular time intervals,
   - with which, instead of the respective duration of the good states, the number of hits of a respective neuron is acquired and stored (4) and
   - with which, instead of a check on the duration of the current states, a check is performed with the aid of the respective number of hits (8) in respect of the current states.

3. Method according to one of the preceding claims, with which, after the training, the self-organising map (SOM) is optimised and the threshold values (3) for the individual nodal points are calculated automatically by a re-evaluation evaluation of good states and stored.

4. Method according to one of the preceding claims, with which a tolerance value is applied to the threshold values.

5. Computer program product comprising a computer-readable program code, which, when executed on a computer, carries out the method according to one of claims 1 to 4.

**6.** Diagnostic system comprising:

- means for training (1) a self-organising map (SOM) using the historical process data (H) as good states of the facility in a learning phase,
- means for the determination (2) and storage (4) of reference path regions in the learning phase, wherein the reference path regions can be defined with the aid of the temporal sequence of neuron hits in the self-organising map (SOM) and the tolerances for the hits,
- means for the storage of threshold values (4) for the Euclidean distances of the good states to the relevant neurons in the self-organising map (SOM) in the learning phase,
- means for the evaluation (5) of the current process data in the facility in the form of a state vector with the aid of the self-organising map (SOM) trained in the learning phase,
- means for checking (6) the Euclidean distance of the current state vector to the neuron hit as to whether the threshold value determined in the learning phase is exceeded,
- means for checking (7) the current path by comparison with the reference path regions determined in the learning phase and for defining a neuron to be hit with the aid of the relevant reference path region as long as the threshold value was not already exceeded in the check with the neuron hit,
- means for the determination (SE) of a symptom vector from the current state vector and either the neuron hit or the neuron that is to be hit, wherein the determination is performed taking into account the threshold value of the relevant neuron (K) and wherein a symptom vector different from the zero vector flags the process anomaly (A) and the symptom vector specifies the process anomaly in more detail (SE, UF) and
- means for outputting the symptom vector,

**characterised in that**,

- in addition to the sequence of neuron hits along a path in the learning phase, the respective duration of the good states is additionally acquired and stored (4) and
- wherein, as long as, during the evaluation of the current process states, the threshold value was not exceeded and the path did not deviate, the duration the good states is additionally used to check (8) the duration of the current states and thereby to identify a process anomaly (A).

**Revendications**

**1.** Procédé mis en œuvre par ordinateur de reconnaissance améliorée d'une anomalie de processus d'une installation technique, comprenant ce qui suit :

- apprentissage (1) d'une carte (SOM) autoorganisatrice dans un premier stade de prétraitement, en utilisant les données (H) historiques de processus, comme états acceptés de l'installation dans une phase d'apprentissage,
- détermination (2) et mise (4) en mémoire de parties de trajet de référence dans un deuxième stade de prétraitement, dans lequel on fixe les parties du trajet de référence à l'aide de la succession dans le temps des neurones concernés de la carte (SOM) autoorganisatrice et des tolérances du succès dans la phase d'apprentissage,
- mise (4) en mémoire de valeurs de seuil pour les distances euclidiennes des états acceptés aux neurones concernés de la carte (SOM) autoorganisatrice dans la phase d'apprentissage,
- exploitation (5) des données de processus en cours de l'installation sous la forme d'un vecteur d'état, à l'aide de la carte (SOM) autoorganisatrice ayant subi un apprentissage pendant la phase d'apprentissage,
- contrôle (6) de la distance euclidienne du vecteur d'état en cours au neurone concerné, en ce qui concerne un dépassement de la valeur de seuil déterminée dans la phase d'apprentissage,
- contrôle (7) du trajet en cours par comparaison aux parties du trajet de référence déterminées dans la phase d'apprentissage et fixation d'un neurone, qui devrait être concerné, à l'aide de la partie du trajet de référence concernée, dans la mesure où la valeur de seuil n'a pas été déjà dépassée lors du contrôle avec le neurone concerné,
- détermination (SE) d'un vecteur de symptôme à partir du vecteur d'état en cours et soit le neurone (6) concerné soit le neurone qui devrait (7) être concerné, la détermination s'effectuant en tenant compte de la valeur de seuil du neurone (K) concerné, et un vecteur symptôme différent du vecteur zéro indiquant (A) l'anomalie de processus et le vecteur symptôme spécifiant (SE, UF) plus précisément l'anomalie de processus, et
- émission du vecteur de processus,

**caractérisé en ce que**

- dans la phase d'apprentissage, on détecte et on mémorise (4), outre la succession des neurones concernés suivant un trajet, encore en plus la durée respective des états acceptés et
- dans lequel, dans la mesure où, lors de l'évaluation des état de processus en cours, il n'y a pas eu de dépassement de la valeur de seuil et pas d'écart du trajet, on effectue encore en plus, à l'aide de la durée des états acceptés, un contrôle (8) de la durée des états en cours et on constate ainsi une anomalie (A) de processus.

**2.** Procédé suivant la revendication 1,

- dans lequel on échantillonne des processus de l'installation technique dans des laps de temps réguliers discrets,
- dans lequel, au lieu de la durée respective des états acceptés, on détecte et on met (4) en mémoire le nombre des succès d'un neurone respectif et
- dans lequel, au lieu de contrôler la durée des états en cours, on effectue un contrôle à l'aide du nombre (8) respectif de succès des états en cours.

**3.** Procédé suivant l'une des revendications précédentes, dans lequel, après l'apprentissage, on effectue une optimisation de la carte (SOM) autoorganisatrice et on calcule et on met en mémoire automatiquement les valeurs (3) de seuil pour les divers neurones, en exploitant à nouveau des états acceptés.

**4.** Procédé suivant l'une des revendications précédentes, dans lequel on applique aux valeurs de seuil une valeur de tolérance.

**5.** Produit de programme d'ordinateur, qui comprend un code de programme déchiffrable par ordinateur, qui, lorsqu'il est réalisé sur un ordinateur, effectue le procédé suivant l'une des revendications 1 à 4.

**6.** Système de diagnostic comprenant :

- des moyens d'apprentissage (1) d'une carte (SOM) autoorganisatrice, en utilisant les données (H) historiques de processus, comme états acceptés de l'installation dans une phase d'apprentissage,
- des moyens de détermination (2) et de mise (4) en mémoire de parties de trajet de référence dans la phase d'apprentissage, les parties de trajet de référence pouvant être fixées à l'aide de la succession dans le temps des neurones concernés de la carte (SOM) autoorganisatrice et des tolérances des succès,
- des moyens de mise (4) en mémoire des valeurs (4) de seuil des distances euclidiennes des états acceptés aux neurones concernés de la carte (SOM) autoorganisatrice dans la phase d'apprentissage,
- des moyens d'exploitation (5) des données de processus en cours de l'installation sous la forme d'un vecteur d'état, à l'aide de la carte (SOM) autoorganisatrice ayant subi un apprentissage dans la phase d'apprentissage,
- des moyens de contrôle (6) de la distance euclidienne du vecteur d'état en cours au neurone concerné, en ce qui concerne un dépassement de la valeur de seuil déterminée dans la phase d'apprentissage,
- des moyens de contrôle (7) du trajet en cours par comparaison aux parties de trajet de référence déterminées dans la phase d'apprentissage, et de fixation d'un neurone, qui aurait dû être concerné, à l'aide de la partie de trajet de référence concernée, dans la mesure où la valeur de seuil n'a pas été déjà dépassée lors du contrôle avec le neurone concerné,
- des moyens de détermination (SE) d'un vecteur symptôme à partir du vecteur d'état en cours et soit du neurone concerné ou du neurone, qui aurait dû être concerné, la détermination s'effectuant en tenant compte de la valeur de seuil du neurone (K) concerné et un vecteur symptôme différent du vecteur nul indiquant l'anomalie (A) de processus et le vecteur symptôme précisant (SE, UF) plus précisément l'anomalie de processus, et
- des moyens d'émission du vecteur symptôme,

**caractérisé en ce que**

- dans la phase d'apprentissage, on détecte et on mémorise (4), outre la succession des neurones concernés suivant un trajet, encore en plus la durée respective des états acceptés et
- dans lequel, dans la mesure où, lors de l'évaluation des état de processus en cours, il n'y a pas eu de dépassement de la valeur de seuil et pas d'écart du trajet, on effectue encore en plus, à l'aide de la durée des états acceptés, un contrôle (8) de la durée des états en cours et on constate ainsi une anomalie (A) de processus.

# FIG 1

Karte der Größe 4x6

SOM

$(3,3) = \begin{pmatrix} p_1 \\ p_2 \\ p_3 \\ p_4 \end{pmatrix} = \begin{pmatrix} 0,5 \\ 1,1 \\ 1,4 \\ 0,4 \end{pmatrix}$

(4,1)          (4,6)

(1,1)          (1,6)

$(1,1) = \begin{pmatrix} 0,1 \\ 1,1 \\ 1,9 \\ 0,4 \end{pmatrix}$

$(2,5) = \begin{pmatrix} 0,5 \\ 1,1 \\ 1,4 \\ 0,4 \end{pmatrix}$

FIG 2

MS: Messwerte, Sollwerte

PFS: Runtime, z.B. DCS, SCADA

H: historische Daten

DS — Diagnosesystem

OFF — offline
1 Erlernen der SOM
2 Pfadermittlung
3 Schwellwert-ermittlung
4 Speicher
- SOM
- Pfade
- #Treffer
- Schwell-werte

ON — online
SOM
5 Auswertung mit SOM
6 Überschreitung der Schwellwerte? — ja / nein
7 Abweichungen der Pfade? — ja / nein
8 Abweichungen #Treffer? — ja / nein
Gutzustand — G
K getroffener Knoten laut Pfadverfolgung
SE Symptom-ermittlung
A Abweichung

UF: System zur Ursachen-findung

S: Signal

V: Visuali-sierung

10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2472440 B1

- EP 2587329 B1

**In der Beschreibung aufgeführte Nicht-Patentliteratur**

- **CHRISTIAN W FREY.** Process diagnosis and monitoring of field bus based automation systems using self-organizing maps and watershed transformations. *IEEE INTERNATIONAL CONFERENCE ON MULTISENSOR FUSION AND INTEGRATION FOR INTELLIGENT SYSTEMS (MFI 2008),* 20. August 2008, ISBN 978-1-4244-2143-5, 620-625